# EUROPÄISCHE PATENTSCHRIFT

(11) **EP 0 539 841 B1**
(45) Veröffentlichungstag und Bekanntmachung des Hinweises auf die Patenterteilung: **19.06.1996**
(21) Anmeldenummer: 92117878.6
(22) Anmeldetag: 20.10.1992
(51) Int. Cl.: B60K 31/02

(54) **Vorrichtung zum automatischen Einhalten der Fahrgeschwindigkeit**
Automatic controller for maintaining constant speed
Dispositif de commande automatique de vitesse de croisière constante

(30) Priorität: 29.10.1991 US 784357
(43) Veröffentlichungstag der Anmeldung: 05.05.1993
(73) Patentinhaber: DEERE & COMPANY, Moline, Illinois 61265 (US)
(72) Erfinder: Hough, Barry Michael, West Bend, Wisconsin 53095 (US); Louden, Howard Alexander, Horicon, Wisconsin 53032 (US)
(74) Vertreter: Feldmann, Bernhard

(56) Entgegenhaltungen:
- DE-A- 1 944 089
- DE-A- 2 202 467
- DE-B- 1 120 898
- US-A- 4 620 575
- PATENT ABSTRACTS OF JAPAN vol. 9, no. 198 (M-404)(1921) 15. August 1985 & JP-A-60 61 343 (AICHI KIKAI KOGYO K.K.) 9. April 1985

## Beschreibung

Die Erfindung bezieht sich auf ein Fahrzeug mit einer verstellbaren Gestängevorrichtung zum Ändern der Fahrgeschwindigkeit und mit einer Vorrichtung zum automatischen Einhalten der Geschwindigkeit, die bei Betätigung der Fahrzeugbremse außer Betrieb gesetzt wird und die einen wahlweise aktivierbaren Magneten, über dessen magnetisches Feld die Gestängevorrichtung feststellbar ist, mit einer Fläche aufweist, die parallel zu einem Teil der Gestängevorrichtung verläuft und diesem Teil unmittelbar benachbart ist, wobei dieser Teil der Gestängevorrichtung linear und parallel zu dieser Fläche des Magneten verstellbar ist und eine Länge aufweist, die es erlaubt, die Gestängevorrichtung in einer Vielzahl von Positionen festzustellen.

Geschwindigkeitsregelungsvorrichtungen mit den Funktionen zua automatischen Einhalten einer vorgegeben Geschwindigkeit und zum Ausschalten der vorgegebenen Geschwindigkeit insbesondere, wenn die Bremse betätigt wird, sind bei Personenkraftwagen allgemein bekannt.

Bei Fahrzeugen, die vorwiegend nicht auf öffentlichen Verkehrswegen eingesetzt werden, wie beispielsweise bei in der Grundstücks- und Landschaftspflege einsetzbaren Kleinschleppern, sind derartige Vorrichtungen ebenfalls vereinzelt bekannt geworden. Sie erlauben es der Bedienungsperson, daß sie bei einem Arbeitseinsatz nicht ständig ihren Fuß auf einem Pedal halten muß, über das die Fahrgeschwindigkeit regelbar ist. Derartige Vorrichtungen sind in elektrische Stromkreise eingebunden und wirken auf zusätzliche Gestänge oder spezielle elektromagnetische Kupplungen, was einen zusätzlichen Platzbedarf bedeutet und das Gesamtsystem komplex gestaltet.

So ist es bereits bekannt, ein Fahrzeug in Form eines Rasentraktors (US-A-4 620 575) mit einer Gestängevorrichtung zu versehen, die über ein Pedal mit zwei Tretflächen verstellbar ist und bei Betätigung auf ein hydrostatisches Getriebe einwirkt. Bei der Verstellung der Gestängevorrichtung wird ein Geschwindigkeitssteuerhebel vertikal verschwenkt, der an seinem oberen Ende mit einem Anschlagstift versehen ist. An der Steuerkonsole des Rasentraktors befindet sich ein von Hand vertikal aus seiner Ausgangsstellung in verschiedene durch Raster vorgegebene Betriebsstellungen verstellbarer und feststellbarer Geschwindigkeitswählhebel, der je nach seiner Stellung den Schwenkbereich des Anschlagstiftes begrenzen kann, wodurch die Gestängevorrichtung in einer Richtung blockierbar und bei Anlage eine vorgegebene Mindestgeschwindigkeit einhaltbar ist. Da die Blockierung nur in einer Richtung erfolgt, kann das Pedal weiter herunter getreten werden, wobei sich der Anschlagstift von dem Geschwindigkeitswählhebel löst und schneller gefahren werden kann. Bei einem danach erfolgenden Zurückführen des Pedals schwenkt der Hebel in entgegengesetzter Richtung und der Stift kommt wieder gegen den Geschwindigkeitswählhebel zur Anlage. Das Fahrzeug fährt mit der vorgegebenen Mindestgeschwindigkeit weiter. Vorkehrungen sind getroffen, daß bei einer Betätigung der Bremse der Geschwindigkeitswählhebel aus seiner Verrastung gelöst wird und in seine Ausgangsstellung zurückfällt, in der er keinen Kontakt mit dem Anschlagstift hat. In dieser Stellung ist die Vorrichtung zum automatischen Einhalten der vorgegebenen Geschwindigkeit außer Betrieb.

Diese Vorrichtung zum automatischen Einhalten der vorgegebenen Geschwindigkeit arbeitet ausschließlich auf mechanischem Weg, ist teileaufwendig, kompliziert, störanfällig und kostenaufwendig.

Das eingangs genannte Fahrzeug oder Kraftfahrzeug (DE-B-1 120 898) weist eine Brennkraftmaschine mit einem Ansaugrohr auf, in dem eine Drosselklappe über einen Hebel verstellbar ist, wobei der Hebel über an ihn angreifende Stangenglieder über ein Gaspedal betätigbar ist. Eins dieser Stangenglieder kann sich durch ein als Magnet ausgebildetes Halteglied hindurchbewegen, das in einen an der Brennkraftmaschine befestigten Zylinder axial verschiebbar angeordnet ist. Hierzu ist das Stangenglied in den Abschlußwänden des Zylinders gelagert. Beim Fließen eines Stromes durch das Halteglied kann eine elektromagnetische Kraft nur dann erzeugt werden, wenn sich das Halteglied in einer Stellung befindet, in der an dem Halteglied und an einer Abschlußwand vorgesehene Kontakte miteinander Berührung haben. Eine derartige Vorrichtung ist in ihrem Aufbau aufwendig und damit nicht kostengünstig herzustellen. Wartungsarbeiten sind schwierig auszuführen. Beabsichtigt der Fahrer bei eingeschalteter Geschwindigkeitsregelung schneller zu fahren, dann wird der Magnet sofort deaktiviert und, um wieder mit einer vorgegebenen Geschwindigkeit fahren zu können, muß der Stromkreis erneut aufgebaut werden. Dieses Dokument bildet den Oberbegriff des Anspruchs 1.

Entsprechendes gilt für die in dem Dokument US-A-2 711 235, das in der DE-B-1 120 898 erwähnt ist, offenbarte Vorrichtung. Hier ist an einem Vergaser ein Relaisschalter vorgesehen, gegen dessen Gehäuse bei stromführender Spule ein flacher Bügelteil eines Schwenkarms gezogen wird, wodurch die Vergasereinstellung arretiert wird.

Aus dem Dokument US-A-2 554 619, das in der DE-B-1 120 898 erwähnt ist, geht ein mit einer Gestängevorrichtung verbundener U-Bügel hervor, dessen Steg bei der Aktivierung eines Solenoids durch eine Scharnierplatte oder durch eine Scharnierplatte und einen Haken bei zwei Solenoiden festgesetzt wird. Der Bügel wird also niemals durch das Magnetfeld festgesetzt. Vielmehr wird bei aktiviertem Solenoid der Spulenkern verstellt und das Solenoid als Stellorgan eingesetzt, damit die Scharnierplatte bewegt werden kann. Grundsätzlich wird das Solenoid deaktiviert, wenn das Gaspedal, das Kupplungspedal oder das Bremspedal betätigt wird. Hierzu sind mit den Pedalen Auslöshehel verbunden, die den Stromkreis zu dem oder den Solenoiden unterbrechen, sobald die Bedienungsperson mit ihrem Fuß das entsprechende Pedal berührt, so daß die Vorrichtung zum Einhalten der Geschwindigkeit außer Betrieb gesetzt wird, und zwar unabhängig davon, ob der Fahrer dies beabsichtigt oder nicht.

Ein Ausführungsbeispiel des Dokumentes US-A-2 554 619 zeigt, daß nur ein einziger Kontakt zur Unterbrechung des Halterelais vorgesehen werden kann, der entweder am Bremspedal oder Kupplungspedal angeordnet oder von Hand betätigbar sein kann.

Die mit der Erfindung zu lösende Aufgabe wird in einer einfacheren Gestaltung und Anordnung der Vorrichtung zum Einhalten der Fahrgeschwindigkeit gesehen. Diese Aufgabe ist nach der Erfindung dadurch gelöst worden, daß der linear und parallel zu der Fläche des Magneten verstellbare Teil der Gestängevorrichtung als flacheisenartiger Gestängeteil ausgebildet ist, daß der Magnet ortsfest an dem insbesondere in der Grundstücks- und Landschaftspflege einsetzbaren Fahrzeug angeordnet ist, daß die parallel zu dem Gestängeteil verlaufende Fläche des Magneten als flache Endfläche ausgebildet ist und daß bei der Verstellung des Gestängeteils zum Erhöhen der Fahrgeschwindigkeit und bei sich im Betriebszustand befindlicher Vorrichtung zum Einhalten der Geschwindigkeit der Magnet aktiviert bleibt, so daß nach Abschluß der Verstellung des Gestängeteils das magnetische Feld des Magneten die Gestängevorrichtung feststellt.

Hierdurch ist eine äußerst einfache und störunanfällige Fahrgeschwindigkeitsregelung geschaffen, bei der lediglich über einen Magneten das bei Fahrgeschwindigkeitsänderungen von Hand oder über den Fuß einer Bedienungsperson verstellbare Gestänge in einer oder mehreren Stellungen festgesetzt wird. Eine Vielzahl von vorgegeben Fahrgeschwindigkeiten kann automatisch eingehalten werden. Nach einem weiteren Vorschlag der Erfindung ist vorgesehen, daß die Gestängevorrichtung zum Ändern der Fahrgeschwindigkeit auf das Fahrzeuggetriebe einwirkt. Hierbei kann der Gestängeteil als flache Metallplatte und der Magnet als Elektromagnet ausgebildet sein.

Jede Fahrgeschwindigkeit kann automatisch eingehalten werden, wenn nach einem weiteren Vorschlag der Erfindung die Länge des Gestängeteils dem Verstellweg der Gestängevorrichtung entspricht.

Aus Sicherheitsgründen ist die Fahrgeschwindigkeitsregelung derart ausgelegt, daß sie automatisch ausgeschaltet wird, wenn die Bremse betätigt wird. Hierzu kann nach der Erfindung vorgesehen sein, daß die Spule des Elektromagneten an einen manuell betätigbaren Geschwindigkeitswählschalter angeschlossen ist, wobei in der Verbindung zwischen Spule und Geschwindigkeitswählschalter ein Bremsschalter vorgesehen ist, der bei einer Betätigung der Bremse öffnet. Der Bremsschalter ist damit als Zustandsschalter ausgebildet, und im Rahmen der Erfindung können noch weitere Zustandsschalter vorgesehen sein, beispielsweise ein Sitzschalter, der öffnet, wenn die Bedienungsperson den Sitz nicht mit ihrem Gewicht belastet. Die Fahrgeschwindigkeitsregelung läßt sich natürlich nach diesem Vorschlag nur einschalten, wenn der Geschwindigkeitswählschalter eingeschaltet ist. Andererseits kann nach der Erfindung außerdem noch vorgesehen sein, daß die vorgegebene Geschwindigkeit nicht automatisch wieder erreicht wird, wenn die Bremse wieder losgelassen wird, d. h. nicht mehr betätigt wird. Deshalb kann die Erfindung ferner noch vorsehen, daß die Spule des Elektromagneten an ein Halterelais angeschlossen ist, dessen Schalter in der Verbindung zwischen der Spule des Elektromagneten und dem Geschwindigkeitswählschalter vorgesehen ist, wobei die Spule des Halterelais mit der Verbindung des Ausgangs des Relaisschalters mit dem Eingang der Spule des Elektromagneten und über eine weitere Leitung mit einem Schaltelement in dem Geschwindigkeitswählschalter verbunden ist, das nur einen kurzzeitigen Schließimpuls vermittelt. Beim Einschalten des Geschwindigkeitswählschalters wird damit das Halterelais über die weitere Leitung kurzzeitig erregt und der Schalter des Relais geschlossen. Bei geschlossenem Relaisschalter und bei geschlossenem Bremsschalter kann danach das Relais über die andere Leitung erregt bleiben und der Relaisschalter bleibt geschlossen. Öffnet sich der Bremsschalter oder ein anderer Zustandsschalter, so wird die Stromzufuhr unterbrochen und die automatische Geschwindigkeitsregelung abgeschaltet. Sie kann danach erst wieder eingeschaltet werden, wenn die Zustandsschalter wieder geschlossen sind und der Geschwindigkeitswählschalter erneut eingerückt wird.

Nach der Erfindung wird außerdem noch vorgeschlagen, daß nach dem Ausschalten der Geschwindigkeitsregelung das Getriebe automatisch in seine Neutralstellung geschaltet wird. Dies kann dadurch erreicht werden, daß der Elektromagnet den Gestängeteil entgegen der Wirkung eines Federmittels feststellt, das bestrebt ist, das Getriebe in eine Position für eine Neutralstellung zu verstellen. Das Federmittel stellt damit die Gestängevorrichtung in ihre Ausgangsstellung zurück, wenn die Magnetkraft des Elektromagneten aufgehoben wird, wobei das zweckmäßig als hydrostatisches Getriebe ausgebildete Getriebe in seine Neutralstellung zurückgestellt wird. Das Federmittel bewirkt außerdem, daß die Gestängevorrichtung unverzüglich in ihre Ausgangsposition zurückkehrt, wenn die Gestängevorrichtung nicht mehr durch Muskelkraft in einer Stellung gehalten wird, die einer bestimmten Fahrgeschwindigkeit entspricht.

Schließlich kann nach der Erfindung die Gestängevorrichtung an ihrem dem Getriebe abgelegenen Ende an einen Geschwindigkeitsregler angeschlossen sein, der durch Muskelkraft derart betätigbar ist, daß die Kraft des Elektromagneten überwindbar ist. Der Geschwindigkeitsregler kann ein Pedal sein, das auch bei eingeschalteter Geschwindigkeitsregelung noch betätigt werden kann, beispielsweise weiter heruntergetreten werden kann, so daß das Fahrzeug schneller fährt. In der neuen Stellung wird dann der Gestängeteil durch den Elektromagneten gehalten, und die neue Geschwindigkeit wird automatisch wieder eingehalten.

In der Zeichnung ist ein nachfolgend näher erläutertes Ausführungsbeispiel der Erfindung dargestellt. Es zeigt:
- Fig. 1: ein Fahrzeug mit einer Einrichtung zum Einhalten einer vorgegebenen Geschwindigkeit,
- Fig. 2: einen elektrischen Schaltkreis für die Einrichtung zum Einhalten der Geschwindigkeit,
- Fig. 3: ausschnittsweise ein Gestänge für die Einrichtung zum Einhalten der Geschwindigkeit und
- Fig. 4: die Draufsicht zu Fig. 3.

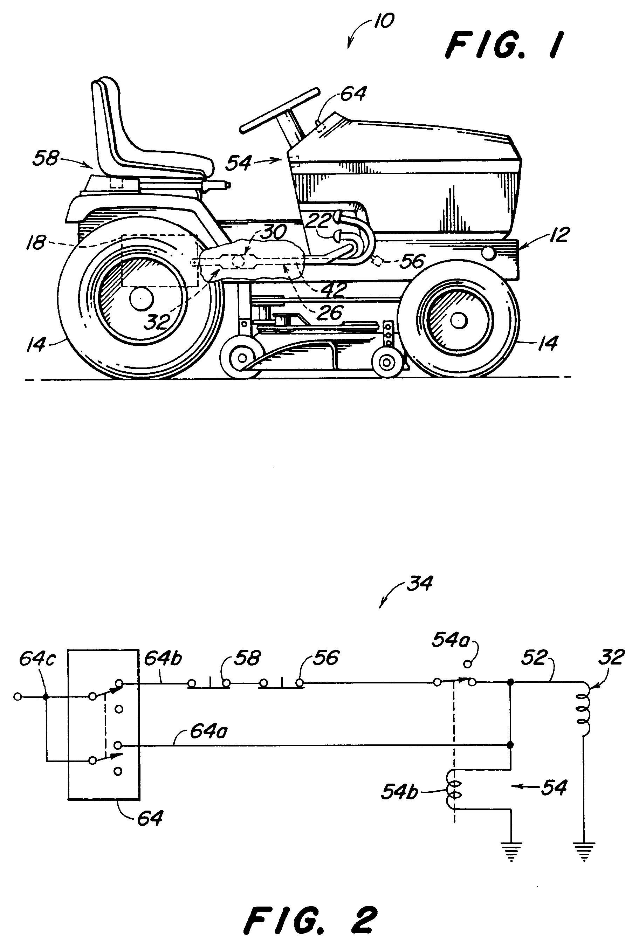

In Fig. 1 der Zeichnung ist ein Fahrzeug 10 in Form eines in der Garten- und Landschaftspflege einsetzbaren Kleinschleppers dargestellt, der mit einem Rahmen 12 ausgerüstet ist und sich auf vorderen und rückwärtigen Laufrädern 14 abstützt. Hierbei werden die rückwärtigen Laufräder 14 durch ein herkömmliches hydrostatisches Getriebe 18 angetrieben, dessen Drehzahl über einen Geschwindigkeitsregler 22 eingestellt werden kann, der beim bevorzugten Ausführungsbeispiel als ein durch den Fuß einer Bedienungsperson betätigbares Pedal ausgebildet ist, das über eine Gestängevorrichtung 26 mit dem Getriebe 18 verbunden ist. Bei einem Heruntertreten des Pedals wird die Gestängevorrichtung 26 verstellt und das Übersetzungsverhältnis im hydrostatischen Getriebe 18 derart verändert, daß das Fahrzeug schneller fahren kann. Das Heruntertreten des Pedals kann gegen die Wirkung einer in der Zeichnung der Einfachheit halber nicht dargestellten Feder erfolgen, so daß das Pedal automatisch in seine Ausgangsstellung zurückkehrt, wenn das Pedal nicht mehr heruntergetreten wird. In der Ausgangsposition des Pedals befindet sich das hydrostatische Getriebe 18 in seiner Neutralstellung.

Damit eine Bedienungsperson beim Einsatz des Kleinschleppers nicht ständig mit ihrem Fuß das Pedal in einer Betriebsstellung halten muß, ist das Fahrzeug 10 mit einer Einrichtung zum Einhalten der vorgegebenen Geschwindigkeit ausgerüstet, über die die Gestängevorrichtung 26 wahlweise in einer durch das Pedal eingestellten Stellung festgestellt werden kann. Diese Einrichtung weist im einzelnen einen zur der Gestängevorrichtung 26 gehörenden flacheisenartigen Gestängeteil 30, einen Elektromagneten 32 und einen in Fig. 2 dargestellten Verriegelungskreis 34 auf, über den der Elektromagnet 32 erregt werden kann. Letzterer ist im unmittelbaren Bereich des Gestängeteils 30 am Rahmen 12 derart angeordnet, daß der Gestängeteil bei erregtem Elektromagneten in seiner jeweiligen Stellung festgehalten wird, wodurch die von der jeweiligen Stellung der Gestängevorrichtung 26 bestimmte Drehzahl des hydrostatischen Getriebes 18 eingehalten wird. Die Geschwindigkeitsregelung trägt damit zu dem Komfort der Bedienungsperson bei, da bei erregtem Elektromagneten die vorgegebene oder gewählte Geschwindigkeit automatisch eingehalten wird.

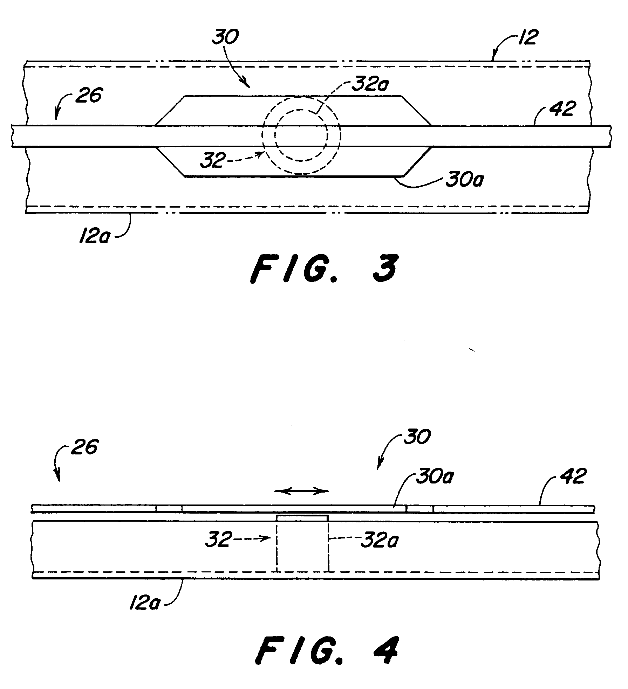

Zu der Gestängevorrichtung 26 gehört noch eine in den Fig. 3 und 4 erkennbare Stange 42, die von dem Pedal 22 zu dem hydrostatischen Getriebe 18 führt und mit der der flacheisenartige Gestängeteil 30 zweckmäßig verbunden ist, der neben und parallel zu einem seitlichen Rahmenteil 12a des Rahmens 12 verläuft. Auch die Stange kann parallel zu dem seitlichen Rahmenteil 12a verlaufen. Wird nun das Pedal 22 betätigt, so verstellt sich der Gestängeteil 30 in Fahrzeuglängsrichtung, und zwar zusammen mit der Stange 42 im wesentlichen parallel zu der Stangenlängsachse. Aus Fig. 3 ist außerdem noch zu erkennen, daß der Gestängeteil 30 an seinen beiden Enden spitz oder kegelig auf die Stange zuläuft und damit einen breiteren bzw. höheren Mittenteil 30a aufweist, dessen Höhe etwas größer ist als die Höhe des flachen Endes 32a des Elektromagneten 32. Wie bereits ausgeführt wurde, ist der Elektromagnet 32 ortsfest am Rahmen 12 angebracht und kann den Gestängeteil 30 auf seinem gesamten Verstellweg festsetzen. Damit sollte der Gestängeteil 30 oder sein Mittenteil 30a eine Länge aufweisen, die zumindest dem gesamten Verstellweg der Gestängevorrichtung 26 entspricht, um das hydrostatische Getriebe 18 von seiner Neutralstellung in eine Stellung für seine Enddrehzahl zu verstellen. Sollte allerdings die Geschwindigkeit bei der Enddrehzahl zu hoch sein oder sollte eine automatische Geschwindigkeitseinstellung bei geringen Geschwindigkeiten nicht gewünscht werden, so kann die Länge des Gestängeteils 30 bzw. dessen Mittenteils 30a auch entsprechend kleiner gewählt werden.

In jedem Falle ist der Elektromagnet jedoch so am Rahmen 12 anzuordnen, daß er den Gestängeteil für jede Geschwindigkeit in einem vorherbestimmten Geschwindigkeitsbereich festsetzen kann.

Bekanntlich besteht ein Elektromagnet aus einem Eisenkern, der von dem magnetischen Feld einer Spule durchsetzt werden kann. Die Spule des Elektromagneten 32 ist in Fig. 2 eingezeichnet, einenends geerdet und an ihrem anderen Ende über eine Leitung 52 mit einem Halterelais 54 verbunden. Das Halterelais 54 weist einen Schalter 54a, dessen Eingang in Reihe zu Zustandsschaltern geschaltet ist, und eine Spule 54b auf, die einenends geerdet und anderenends einmal mit der mit der Ausgangsklemme des Schalters 54a verbundenen und eine Halteschleife bildenden Leitung 52 und zum anderen über eine weitere Leitung mit einer der Ausgangsklemmen 64a eines Geschwindigkeitswählschalters 64 verbunden ist. Der Geschwindigkeitswählschalter 64 weist noch eine zweite Ausgangsklemme 64b auf, an die die Zustandsschalter über eine zu dem Eingang des Schalters 54a führende Leitung angeschlossen sind. Die Zustandsschalter können bei dem bevorzugten Ausführungsbeispiel als Bremsschalter 56 und als Sitzschalter 58 ausgebildet sein, die nur geschlossen sind, wenn die Bremse nicht betätigt wird oder wenn sich eine Bedienungsperson auf dem Sitz befindet. Befindet sich keine Bedienungsperson auf dem Sitz oder wird die Bremse betätigt, so öffnet sich der jeweilige Zustandsschalter selbsttätig. Die Eingangsklemmen 64c des Geschwindigkeitswählschalters 64 sind mit einer Zündspule verkabelt.

Bei einem manuellen Einschalten des Geschwindigkeitswählschalters 64 werden die Spule 54b des Halterelais 54 und die des Elektromagneten 32 zunächst kurzfristig erregt und der Schalter 54a wird geschlossen. Die Spule 54b und die des Elektromagneten bleiben erregt und der Schalter bleibt 54a geschlossen, wenn der Brems- und Sitzschalter 56 und 58 geschlossen sind, da dann die Spule 54b des Relais 54 über die Halteschleife erregt bleibt. Ist einer dieser Schalter 56 oder 58 nicht geschlossen oder sind beide Schalter offen, so kommt die Halteschleife nicht zur Wirkung, da ein Stromfluß von der Eingangsklemme 64c zu der unteren Ausgangsklemme 64a nur kurzfristig erfolgen kann. Hierzu ist der Geschwindigkeitswählschalter 64 mit einem unteren und einem oberen Schaltelement versehen, wobei das untere Schaltelement beim Einschalten nur eine kurzfristige Verbindung zwischen der Eingangsklemme 64c und der unteren Ausgangsklemme 64a herstellt, also beim Betätigen nur einen kurzzeitigen Schließimpuls vermittelt und direkt danach in eine Offenstellung geht, wohingegen das obere Schaltelement beim Einschalten des Geschwindigkeitswählschalters 64 eine ständige Verbindung zwischen der Eingangsklemme 64c und der Ausgangsklemme 64b vermittelt. Bei einem Ausschalten des Geschwindigkeitswählschalters 64 sind dagegen beide Schaltelemente offen, und sofern die Bedienungsperson dann nicht ihren Fuß auf dem Pedal 22 hat, kehrt das Pedal in seine Ausgangsstellung, die der Neutralstellung des hydrostatischen Getriebes entspricht, zurück. Gleichfalls kehrt das Pedal 22 in seine Ausgangsposition zurück, wenn der Stromfluß zu dem Schalter 54a unterbrochen wird, insbesondere dann, wenn der Bremsschalter 56 oder der Sitzschalter 58 sich selbsttätig öffnen, wenn die Bremse betätigt wird oder die Bedienungsperson den Fahrersitz verläßt. Wird nach der Anfangsphase der Stromfluß zu dem Schalter 54a unterbrochen, so steht die Spule 54b des Relais 54 nicht mehr unter Spannung, der Schalter 54a öffnet sich selbsttätig und die Spule des Elektromagneten 32 wird nicht mehr erregt. Der Elektromagnet kann dadurch den Gestängeteil 30 nicht mehr in seiner entsprechenden Position festhalten, und infolge von an der Gestängevorrichtung angreifender Federmittel verstellt sich die Gestängevorrichtung in ihre Ausgangsposition zurück, in der das hydrostatische Getriebe 18 seine Neutralstellung einnimmt.

Die Geschwindigkeitsregelung vermittelt damit eine weitere Funktion, und zwar das Ausschalten des Fahrantriebes, wenn einer oder beide Zustandsschalter sich öffnen oder die Geschwindigkeitsregelung durch Betätigen des Geschwindigkeitswählschalters ausgeschaltet wird. Um in einem solchen Falle die Geschwindigkeitsregelung wieder aktivieren zu können, muß der Geschwindigkeitswählschalter 64 wieder eingeschaltet werden. Eine Geschwindigkeitsspeicherung ist aus Sicherheitsgründen nicht vorgesehen.

Befindet sich die Bedienungsperson auf dem Fahrersitz und hat das Fahrzeug eine gewünschte Fahrgeschwindigkeit durch Heruntertreten des Pedals oder durch die Betätigung einer anderen Geschwindigkeitsregelung 22 erreicht, so kann die Bedienungsperson den Geschwindigkeitswählschalter 64 einrücken, wodurch der Schalter 54a geschlossen und der Elektromagnet 32 aktiviert wird. Der Elektromagnet zieht dann den flacheisenähnlich ausgebildeten Gestängeteil 30 an und hält ihn in seiner Stellung mit Bezug auf den Rahmen 12 fest, wodurch die Gestängevorrichtung 26 ebenfalls ihre Relativlage nicht mehr verändert. Die Drehzahl im hydrostatischen Getriebe 18 bleibt konstant und damit auch die Fahrgeschwindigkeit des Fahrzeuges 10. Unter diesen Bedingungen kann die Bedienungsperson ohne weiteres ihren Fuß von dem Pedal 22 fortnehmen, und die gewählte Geschwindigkeit wird solange beibehalten bis der Stromfluß zu dem Schalter 54a des Relais 54 unterbrochen wird, sei es durch Ausschalten des Geschwindigkeitswählschalters 54, Betätigung der Bremse oder Verlassen des Sitzes. Sobald der Elektromagnet 32 nicht mehr erregt wird, stellt sich die Gestängevorrichtung 26 automatisch in ihre Ausgangsstellung zurück oder in eine Stellung, die durch den Fuß der Bedienungsperson, sofern sie das Pedal in irgendeiner heruntergetretenen Position festhält, vorgegeben ist. Die von dem Elektromagneten 32 herrührende Magnetkraft (etwa 75 Pfund) reicht vollkommen aus, um die Gestängevorrichtung auch gegen die Wirkung der Federmittel, die die Gestängevorrichtung in ihre Neutralstellung zurückstellen wollen, in ihrer Stellung für den gewünschten Fahrbetrieb zu halten. Andererseits ist die Magnetkraft nicht so groß, daß die Bedienungsperson diese nicht durch Muskelkraft überwinden könnte. Denn auch, wenn der Elektromagnet aktiviert ist, kann die Bedienungsperson das Pedal mit ihrem Fuß weiter heruntertreten, damit das Fahrzeug, falls erwünscht, schneller fahren kann. In einem solchen Fall verschiebt sich der Gestängeteil 30 dann auf dem flachen Ende des Elektromagneten 32 und die neu eingestellte Geschwindigkeit wird weiter beibehalten auch, wenn die Bedienungsperson ihren Fuß wieder von dem Pedal fortnehmen sollte.

## Patentansprüche

1. Fahrzeug (10) mit einer verstellbaren Gestängevorrichtung (26) zum Ändern der Fahrgeschwindigkeit und mit einer Vorrichtung zum automatischen Einhalten der Geschwindigkeit, die bei Betätigung der Fahrzeugbremse außer Betrieb gesetzt wird und die einen wahlweise aktivierbaren Magneten (32), über dessen magnetisches Feld die Gestängevorrichtung (26) feststellbar ist, mit einer Fläche aufweist, die parallel zu einem Teil der Gestängevorrichtung (26) verläuft und diesem Teil unmittelbar benachbart ist, wobei dieser Teil der Gestängevorrichtung (26) linear und parallel zu dieser Fläche des Magneten (32) verstellbar ist und eine Länge aufweist, die es erlaubt, die Gestängevorrichtung (26) in einer Vielzahl von Positionen festzustellen, dadurch gekennzeichnet, daß der linear und parallel zu der Fläche des Magneten (32) verstellbare Teil der Gestängevorrichtung (26) als flacheisenartiger Gestängeteil (30) ausgebildet ist, daß der Magnet (32) ortsfest an dem insbesondere in der Grundstücks- und Landschaftspflege einsetzbaren Fahrzeug (10) angeordnet ist, daß die parallel zu dem Gestängeteil (30) verlaufende Fläche des Magneten (32) als flache Endfläche (32a) ausgebildet ist und daß bei der Verstellung des Gestängeteils (30) zum Erhöhen der Fahrgeschwindigkeit und bei sich im Betriebszustand befindlicher Vorrichtung zum Einhalten der Geschwindigkeit der Magnet (32) aktiviert bleibt, so daß nach Abschluß der Verstellung des Gestängeteils (30) das magnetische Feld des Magneten (32) die Gestängevorrichtung (26) feststellt.

2. Fahrzeug nach Anspruch 1, dadurch gekennzeichnet, daß die Gestängevorrichtung (26) zum Ändern der Fahrgeschwindigkeit auf das Fahrzeuggetriebe (18) einwirkt.

3. Fahrzeug nach Anspruch 2, dadurch gekennzeichnet, daß der Gestängeteil (30) als flache Metallplatte und der Magnet als Elektromagnet (32) ausgebildet ist.

4. Fahrzeug nach Anspruch 1, dadurch gekennzeichnet, daß die Länge des Gestängeteils (30) dem Verstellweg der Gestängevorrichtung (26) entspricht.

5. Fahrzeug nach einem oder mehreren der vorherigen Ansprüche, dadurch gekennzeichnet, daß die Spule des Elektromagneten (32) an einen manuell betätigbaren Geschwindigkeitswählschalter (64) angeschlossen ist, wobei in der Verbindung zwischen Spule und Geschwindigkeitswählschalter ein Bremsschalter (56) vorgesehen ist, der bei einer Betätigung der Bremse öffnet.

6. Fahrzeug nach Anspruch 5, dadurch gekennzeichnet, daß die Spule des Elektromagneten (32) an ein Halterelais (54) angeschlossen ist, dessen Schalter (54a) in der Verbindung zwischen der Spule des Elektromagneten (32) und dem Geschwindigkeitswählschalter (64) vorgesehen ist, wobei die Spule (54b) des Halterelais (54) mit der Verbindung des Ausgangs des Relaisschalters (54a) mit dem Eingang der Spule des Elektromagneten (32) und über eine weitere Leitung mit einem Schaltelement in dem Geschwindigkeitswählschalter (64) verbunden ist, das nur einen kurzzeitigen Schließimpuls vermittelt.

7. Fahrzeug nach einem oder mehreren der vorherigen Ansprüche, dadurch gekennzeichnet, daß der Elektromagnet (32) den Gestängeteil (30) entgegen der Wirkung eines Federmittels feststellt, das bestrebt ist, das Getriebe (18) in eine Position für eine Neutralstellung zu verstellen.

8. Fahrzeug nach einem oder mehreren der vorherigen Ansprüche, dadurch gekennzeichnet, daß die Gestängevorrichtung (26) an ihrem dem Getriebe (18) abgelegenen Ende an einen Geschwindigkeitsregler (22) angeschlossen ist, der durch Muskelkraft derart betätigbar ist, daß die Kraft des Elektromagneten (32) überwindbar ist.

## Claims

1. A vehicle (10) with an adjustable linkage device (26) for altering the vehicle speed and an apparatus for automatically maintaining the speed, which is put out of operation on actuation of the vehicle brake and which comprises a selectively actuated magnet (32), through whose magnetic field the linkage device (26) can be held in position, with a surface which runs parallel to a part of the linkage device (26) and is immediately adjacent to this part, wherein this part of the linkage device (26) can be adjusted linearly and parallel to this surface of the magnet (32) and has a length which allows it to hold the linkage device (26) in a plurality of positions, characterized in that the part of the linkage device (26) which is adjustable linearly and parallel to the surface of the magnet (32) is in the form of a linkage part (30) like a flat iron section, in that the magnet (32) is arranged at a fixed position on the vehicle (10) for use especially in care of plots of land and the countryside, in that the surface of the magnet (32) running parallel to the linkage part (30) is in the form of a flat end surface (32a), and in that the magnet (32) remains activated during adjustment of the linkage part (30) to increase the vehicle speed with the apparatus for maintaining the speed in the operating state, so that the magnetic field of the magnet (32) holds the position of the linkage device (26) after conclusion of the adjustment of the linkage part (30).

2. A vehicle according to claim 1, characterized in that the linkage device (26) for altering the speed of the vehicle acts on the vehicle transmission (18).

3. A vehicle according to claim 2, characterized in that the linkage part (30) is in the form of a flat metal plate and the magnet is an electromagnet (30).

4. A vehicle according to claim 1, characterized in that the length of the linkage part (30) corresponds to the stroke of adjustment of the linkage device (26).

5. A vehicle according to one or more of the preceding claims, characterized in that the coil of the electromagnet (32) is connected to a manually operable speed selector switch (64), wherein a brake switch (56) is provided in the connecting path between the coil and the speed selector switch and opens when the brake is operated.

6. A vehicle according to claim 5, characterized in that the coil of the electromagnet (32) is connected to a hold relay (54), whose switch (54a) is included in the connection between the coil of the electromagnet (32) and the speed selector switch (64), wherein the coil (54b) of the hold relay (54) is connected to the connection of the output of the relay switch (54a) to the input of the coil of the electromagnet (32) and through a further line to a switch element in the speed selector switch (64) which issues only a brief closing pulse.

7. A vehicle according to one or more of the preceding claims, characterized in that the electromagnet (32) holds the position of the linkage part (30) against the action of spring means which bias the transmission (18) into a position for selection of neutral.

8. A vehicle according to one or more of the preceding claims, characterized in that the linkage device (26) is connected at its end remote from the transmission (18) to a speed regulator (22) which can be so operated by muscular force that the force of the electromagnet (32) can be overridden.

## Revendications

1. Véhicule (10) comportant un dispositif de tringlerie réglable (26) pour modifier la vitesse de déplacement, et un dispositif pour maintenir auto-matiquement la vitesse, qui est mis hors service lors de l'actionnement des freins du véhicule et comporte un aimant (32) qui peut être actionné au choix et au moyen du champ magnétique duquel le dispositif de tringlerie (26) peut être bloqué et qui comporte une surface, qui s'étend parallèlement à une partie du dispositif de tringlerie (26) et est directement voisine de cette partie, cette partie du dispositif de tringlerie (26) étant déplaçable linéairement et parallèlement à cette surface de l'aimant (32) et possédant une longueur qui permet de bloquer le dispositif de tringlerie (26) dans une multiplicité de positions, caractérisé en ce que la partie, qui est déplaçable linéairement et parallèlement à la surface de l'aimant (32), du dispositif de tringlerie (26) est agencée sous la forme d'un élément de tringlerie (30) en forme de fer plat, que l'aimant (32) est monté fixe sur le véhicule (10), qui peut être utilisé notamment dans des travaux d'entretien de terrains et de préservation du paysage, que la surface de l'aimant (32), qui est parallèle à l'élément de tringlerie (32), est agencée sous la forme d'une surface d'extrémité plane (32a) et que, lors du déplacement de l'élément de tringlerie (30) pour accroître la vitesse, du véhicule et dans le cas où le dispositif pour le maintien de la vitesse est dans son état de fonctionnement, l'aimant (32) reste activé de sorte qu'à la fin du déplacement de l'élément de tringlerie (30), le champ magnétique de l'aimant (32) bloque le dispositif de tringlerie (26).

2. Véhicule selon la revendication 1, caractérisé en ce que le dispositif de tringlerie (26) pour modifier la vitesse de déplacement agit sur la transmission (18) du véhicule.

3. Véhicule selon la revendication 2, caractérisé en ce que l'élément de tringlerie (30) est agencé sous la forme d'une plaque métallique plane et que l'aimant est agencé sous la forme d'un électroaimant (32).

4. Véhicule selon la revendication 1, caractérisé en ce que la longueur de l'élément de tringlerie (30) correspond au trajet de déplacement du dispositif de tringlerie (26).

5. Véhicule selon une ou plusieurs des revendications précédentes, caractérisé en ce que la bobine de l'électroaimant (32) est raccordée à un commutateur de sélection de vitesse (64), qui peut être actionné manuellement, un contacteur de frein (56), qui s'ouvre lors d'un actionnement du frein, étant prévu dans la liaison entre la bobine et le commutateur de sélection de vitesse.

6. Véhicule selon la revendication 5, caractérisé en ce que la bobine de l'électroaimant (32) est raccordée à un relais de maintien (54), dont l'interrupteur (54a) est prévu dans la liaison entre la bobine de l'électroaimant (32) et le commutateur de sélection de vitesse (64), la bobine (54b) du relais de maintien (54) étant reliée à la connexion reliant la sortie de l'interrupteur (54a) du relais à l'entrée de la bobine de l'électroaimant (32) et, par l'intermédiaire d'une autre ligne, à un élément de commutation situé dans le commutateur de sélection de vitesse (64), qui transmet uniquement une impulsion de fermeture de brève durée.

7. Véhicule selon une ou plusieurs des revendications précédentes, caractérisé en ce que l'électroaimant (32) bloque l'élément de tringlerie (30) à l'encontre de l'action d'un moyen formant ressort, qui tend à amener la transmission (18) dans un état correspondant à une position neutre.

8. Véhicule selon une ou plusieurs des revendications précédentes, caractérisé en ce que le dispositif de tringlerie (26) est raccordé, par son extrémité située à l'opposé de la transmission (18), à un régulateur de vitesse (22), qui peut être actionné sous l'action d'une force musculaire de telle sorte que la force de l'électroaimant (32) peut être surmontée.
